# EUROPEAN PATENT SPECIFICATION

(11) **EP 0 739 762 B1**
(45) Date of publication and mention of the grant of the patent: **17.03.1999**
(21) Application number: 96106444.1
(22) Date of filing: 24.04.1996
(51) Int. Cl.: B60G 7/00, B62D 7/18, B21K 1/74

(54) **Arm and process for making same**
Lenker und Verfahren zu dessen Herstellung
Bras et procédé pour son fabrication

(30) Priority: 28.04.1995 JP 105784/95
(43) Date of publication of application: 30.10.1996
(73) Proprietor: TOYOTA JIDOSHA KABUSHIKI KAISHA, Aichi-ken (JP)
(72) Inventor: Kaneko, Kozo, c/o Toyota Jidosha K.K., Aichi-ken (JP); Kurumatani, Keisuke, c/o Toyota Jidosha K.K., Aichi-ken (JP); Sakurada, Shin, c/o Toyota Jidosha K.K., Aichi-ken (JP); Kimura, Masatoshi, c/o Toyota Jidosha K.K., Aichi-ken (JP)
(74) Representative: Winter, Brandl, Fürniss, Hübner, Röss, Kaiser, Polte, Kindermann Partnerschaft

(56) References cited:
- PATENT ABSTRACTS OF JAPAN vol. 008, no. 073 (M-287), 5 April 1984 & JP-A-58 218407 (HIRUTA KOGYO KK), 19 December 1983,
- PATENT ABSTRACTS OF JAPAN vol. 015, no. 457 (M-1181), 20 November 1991 & JP-A-03 193512 (MAZDA MOTOR CORP), 23 August 1991,
- PATENT ABSTRACTS OF JAPAN vol. 011, no. 241 (M-614), 7 August 1987 & JP-A-62 053285 (HONDA MOTOR CO LTD), 7 March 1987,
- PATENT ABSTRACTS OF JAPAN vol. 018, no. 190 (M-1586), 31 March 1994 & JP-A-06 000571 (SHOWA DENKO KK;OTHERS: 02), 11 January 1994,
- PATENT ABSTRACTS OF JAPAN vol. 95, no. 008 & JP-A-07 214222 (KOBE STEEL LTD;OTHERS: 01), 15 August 1995,

## Description

### Field of the Invention

The present invention relates to an arm and process for forging the same. The arm to which the present invention relates is suitable to be used as an upper arm, a lower arm used in a suspension of a vehicle or as a knuckle which connects these.

### Description of the Related Art

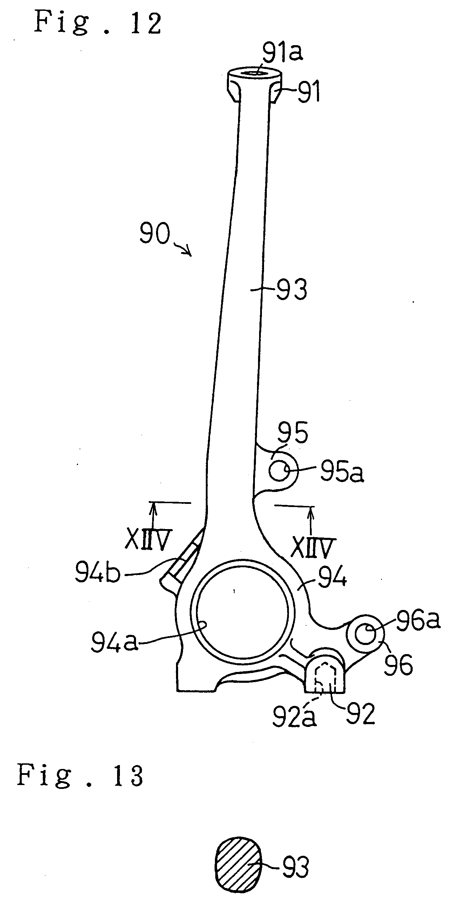

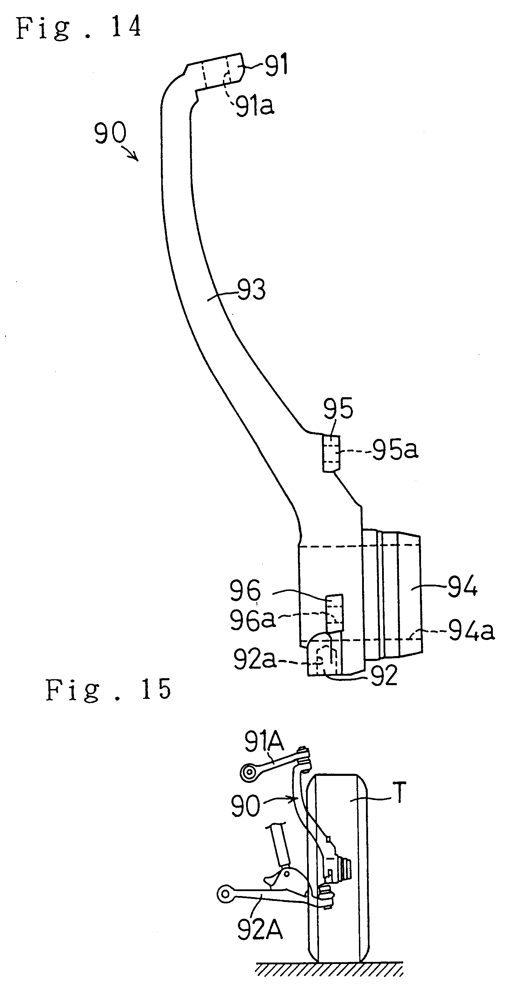

As the conventional arm, for example as a knuckle, arms shown in Figures 12 to 14 have been known. This knuckle 90, as shown in Figure 12 and 14, comprises: two connecting portions 91 and 92 having volt holes 91a and 92a respectively; a communicating portion 93 which communicates each of the connecting portions 91 and 92. In this knuckle 90, a boss portion 94 is formed at the side of the connecting portion 92 of the communicating portion 93; and an axial hole 94a is penetrated through this boss portion 94. Also at the boss portion 94 side of the communicating portion 93 and at the part adjacent to the connecting portion 92, brackets 95 and 96 into which bolt holes 95a and 96a are penetrated respectively are provided so as to project; and at the side of the boss portion 94, a bearing surface 94b is formed.

By using this knuckle 90, when the part of the suspension at the front side of a vehicle as shown in Figure 15 is composed, as shown in Figures 12 and 14, an upper arm 91A is connected to the connecting portion 91 through a bolt hole 91a; and a lower arm 92A is connected to the connecting portion 92 through the bolt hole 92a. At the axial hole 94a of the boss portion 94, a bearing which is not shown in the Figure is provided so that a wheel of a tire T is kept rotatably through this bearing. At each of the brackets 95 and 96, brake calipers, not shown, are fixed through the bolt holes 95a and 96a; and at the bearing surface 94b, ABS (Antilock Brake System) sensor is provided. Accordingly, if the vehicle having the above-mentioned suspension, bending force generated from the tire T is received by the communicating portion 93.

However, the conventional knuckle 90 has the following disadvantages. In order to secure enough strength against the bending force, as shown in Figure 13, the conventional knuckle 90 comprises the communicating portion 93 shaped in almost in round shape whose cross section is solid; and material is existed near a neutral axis; so that the conventional knuckle 90 is weighted. Thus weighted knuckle 90 causes to increase unspring load; therefore weightiness of a vehicle brings some harmful effects such as deterioration of fuel consumption and deterioration of suspension characteristics.

In addition to this knuckle 90, in an arm which comprises: at least two connecting portions which are connected to a mating member; a communicating portion which connects each of connecting portions; and which receives the bending force at the communicating portion, in order to secure enough strength against the bending force in this way, almost communicating portions are weighted because the cross sections of the communicating portions are solid and shaped almost in round shapes. This weightiness of the communication portions causes various disadvantages.

In this conventional arm, in order to secure enough strength against the bending force as well as to make lightening possible, it is assumed that the communicating portion having high section modulus is preferably shaped in hollow shape. Also as for a lower arm described in Japanese Unexamined Utility Model Publication No. 58-163302, it may be assumed that the cross section of the communicating portion is shaped in almost I shape having high section modulus.

However, methods for forming an arm whose communicating portion is hollow are limited to be: a method for forming the communicating portion by casting; a method for forming the communicating portion by bonding of a plurality of member; and a method for forming the communication portion by cutting the central portion of the solid member formed by forging and so on. This is because that if the arm whose communicating portion is hollow is formed only by forging, it is forged by using forging pressure which is parallel to the communicating direction, so that considerably higher forging pressure is generally necessary in order to form the long communicating portion to be hollow and it is not possible in actual cases. And if the communicating portion is formed by casting, the arm having this communicating portion, as a whole, unfavorably has uniform metallographic structure and week toughness. Moreover, if the communicating is formed by bending, the bending portion of the arm having this communicating portion is existed at the communicating portion so that the communicating portion receives the bending force and there may be a fear with respect to the bending strength at the communicating portion. Furthermore, if the communicating portion is formed by cutting, the arm having this communicating portion may have flaws at the time of cutting at the communicating portion, therefore, there is a fear with respect to the bending strength. As mentioned above, it is hard to obtain the required characteristics by using the arm whose communication portion is hollow by the present technique.

In this respect, if the cross section of the communication portion is shaped in almost I shape, it may be possible to form this arm only by forging.

However, in order to secure the higher section modulus, in the arm whose height of rib rising from web is increased and whose cross section is shaped in I shape, the high forging pressure is required and it may cause forging to be more difficult. Furthermore, in this arm, there may be raised some forging defects such as wrinkles and flaws at the portion from which the rib is rising up, therefore, there also arises a fear with respect to the bending strength. In this way, it is hard to obtain the required characteristics by using the arm having the communicating portion whose cross section is shaped in I shape.

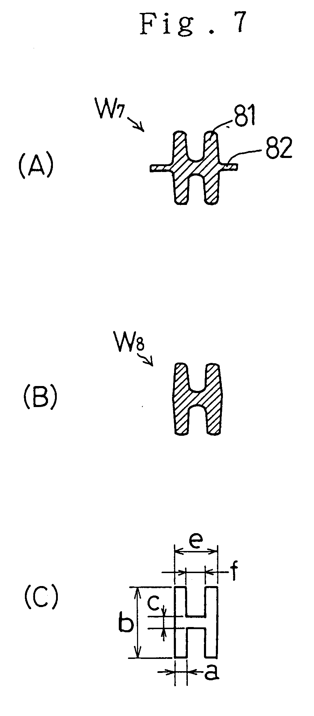

The next coming prior art document JP-A-62053285 discloses an automobile knuckle with a communication portion between two connecting portions. The communication portion has longitudinal grooves in the inner and outer side surfaces of the linear section and therefore has an H-like cross-sectional shape. A similar structure is shown in Fig. 7. Such a structure has a small cross-section area and a low section modulus.

### SUMMARY OF THE INVENTION

The first object of the present invention is to secure enough strength against bending force as well as to realize lightening, without impairing the required characteristics in this kind of arm.

The second object of the present invention is to realize forging of the lightening arm as well as to secure the enough strength against the bending force, without impairing the required characteristics.

These objects are solved by an arm according to claim 1 and a process according to claim 8.

In the arm according to Claim 1, by having at least three beam portions which are extending toward each of communicating directions and which are not extending in the same plane, a neutral axes are existed at the spaces among each of beam portions and the section modulus there are high. Namely, because there are at least three beam portions, even if each of beam portions are extending toward each of communicating directions, the shape thereof is in the shape in which they are not existed in the same plane. And therefore, this arm secures enough strength against the bending force and also this arm becomes light in weight by decreasing the quantity of materials at the spaces among each of beam portions.

In the process for forging the arm according to Claim 2, by forging the raw material in the process of forging at first, each of connecting portions and raw material communicating portion are formed. At this time, by the forging pressure in the direction which is perpendicular to the communicating direction, even if the communicating portion is long, and even if the connecting portions are in the shapes having the portions which are thicker than the communicating portion, it is possible to forge each of connecting portions and raw material communicating portion.

Then, by the process of bending, the raw material beam portions of raw material communicating portions are bent by the bending pressure. Owing to this, each of beam portions are not existed in the same plane and the communicating portion which receives the bending force is formed.

If the bolt holes are necessary at the connecting portions, after the step of bending, the bolt holes are formed by cutting without damaging the arm characteristics.

The arm obtained in this way is formed by forging, the metallographic structure is uniform and toughness is strong and at the same time, the bending strength at the communicating portion which receives the bending force is not impaired. By comparing the case in which the communicating portion is in almost I shape, higher section modulus is obtained and also high forging pressure is not so required so that the forging can be conducted easily and forging defects are hard to be generated. Accordingly, this arm secures the enough strength against the bending force and by decreasing the quantity of material at the spaces among each of beam portions, lightening thereof is realized.

The bolt holes which are cut at the connecting portions if necessary do not receive the bending force at the connecting portions and the arm characteristics are not impaired.

As described above in details, in the arm of Claim 1, without damaging the required characteristics, it is possible to secure enough strength against bending force as well as to realize lightening.

In the method for forging an arm according to Claim 8, without impairing the required characteristics, it is possible to secure enough strength against bending force as well as to forge the arm whose weight is reduced.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:
Figure 1 relates to a First Preferred Embodiment: (A) is a cross-sectional view of a forging die and so on; (B) is a cross-sectional view of a deburring die and so on; and (C) is a cross-sectional view of a bending die and so on;
Figure 2 is a plan view of a knuckle in the First Preferred Embodiment;
Figure 3 relates to the knuckle of the First Preferred Embodiment and a III to III end face view of Figure 2;
Figure 4 is a side view of the knuckle in the First Preferred Embodiment;
Figure 5 relates to a knuckle in a Second Preferred Embodiment: (A) is an end face view after the forging in the same way as that of Figure 3; and (B) is an end face view after deburring in the same way as that of Figure 3;
Figure 6 relates to a knuckle in a Comparative Example 1: (A) is an end face view after the forging in the same way as that of Figure 3; and (B) is an end face view after deburring in the same way as that of Figure 3;
Figure 7 relates to a knuckle in a Comparative Example 2: (A) is an end face view after the forging in the same way as that of Figure 3; (B) is an end face view after deburring in the same way as that of Figure 3; and (C) is a view of section modulus model;
Figure 8 relates to a knuckle in a Third Preferred Embodiment: (A) is an end face view after the forging in the same way as that of Figure 3; and (B) is an end face view after deburring in the same way as that of Figure 3;
Figure 9 relates to a knuckle in a Fourth Preferred Embodiment: (A) is an end face view after the forging in the same way as that of Figure 3; and (B) is an end face view after deburring in the same way as that of Figure 3;
Figure 10 relates to the knuckle in the Fourth Preferred Embodiment and it is an end face view in the same way as that of Figure 3;
Figure 11 relates to a knuckle in a Fifth Preferred embodiment and is an end face view in the same way as that of Figure 3;
Figure 12 is a plan view of the conventional knuckle;
Figure 13 relates to the conventional knuckle and a XIIV to XIIV end face view of Figure 12;
Figure 14 is a side view of the conventional knuckle; and
Figure 15 is a perspective view showing a part of the suspension at the front side of a vehicle.

### DETAILED DESCRIPTION OF THE PREFERRED EMBODIMENTS

Having generally described the present invention, a further understanding can be obtained by reference to the specific preferred embodiments which are provided therein for purposes of illustration only and are not intended to limit the scope of the appended claims.

Hereinafter, the present invention will be concretely described by way of Preferred Embodiments 1 to 6 by reference to the figures.

### First Preferred Embodiment

In a First Preferred Embodiment, the knuckle of Claim 1 is formed by the forging process of Claim 2.

### (Forging Process)

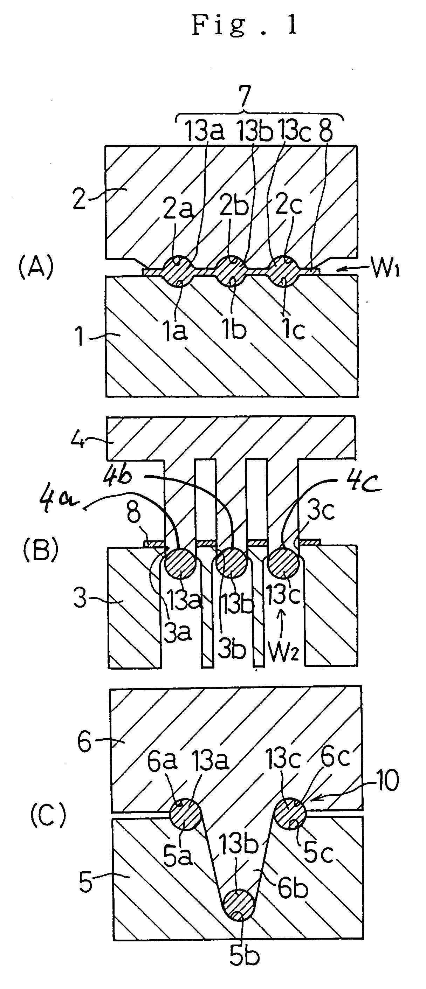

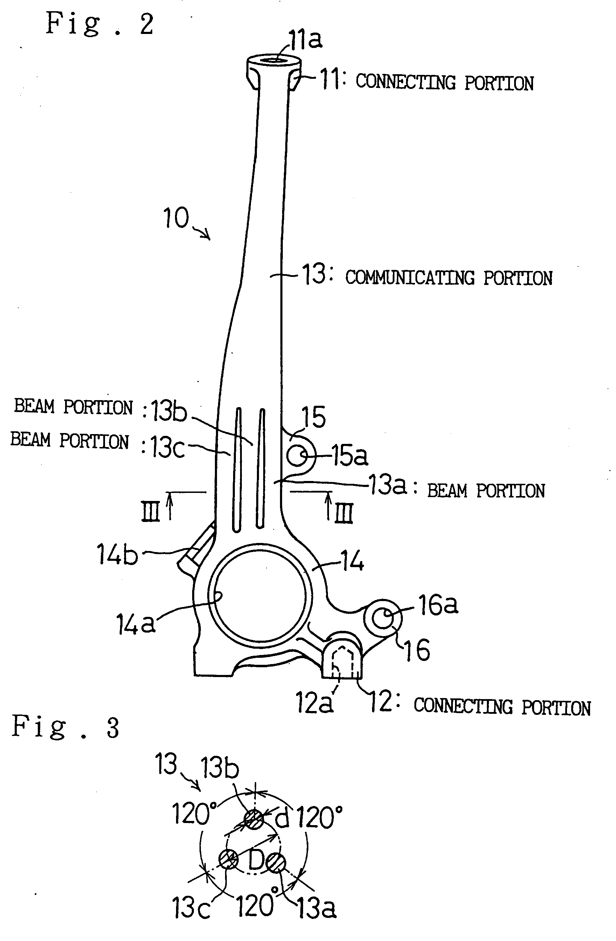

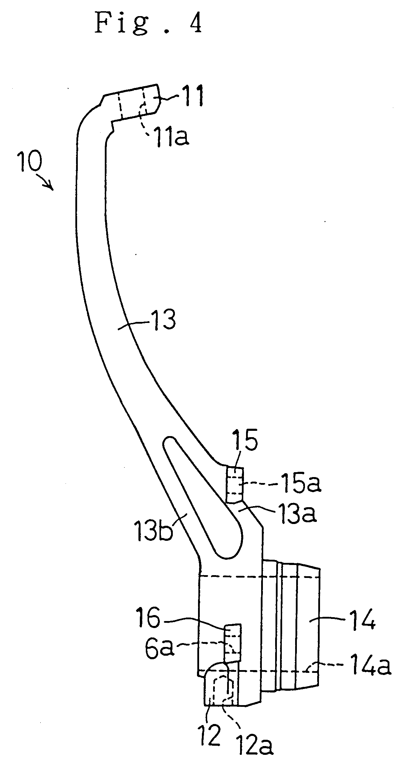

As shown in Figure 1 (A), a forging die comprising a lower die 1 and a upper die 2 was prepared. At the upper surface of the lower die 1, three concave portions 1a to 1c whose cross sections are in semi-sphere shape are provided in parallel; and also at the lower surface of the upper die 2, three concave portions 2a to 2c which are facing to each of concave portions 1a to 1c and whose cross sections are in semi-sphere shape are provided in parallel. These concave portions 1a to 1c and 2a to 2c correspond to near of a boss portion 14 side of a communicating portion 13 which has relatively higher freedom of design in the communicating portion 13 of a knuckle 10 in the First Preferred Embodiment shown in Figures 2 and 4.

A raw material in plate shape was installed on the upper surface of the lower die 1 of the forging die shown in Figure 1 (A), and the raw material was forged by lowering the upper die 2 and by the predetermined forging pressure. Thus forged product W₁ has two connecting portions 11 and 12 (refer to Figures 2 and 4) and a raw material communicating portion 7 which communicates each of connecting portions 11 and 12. The raw material communicating portion 7 comprises three raw material beam portions 13a to 13c and burrs 8 which exist among each of rough beam portions 13a to 13c and at the side surfaces of rough beam portions 13a and 13c.

At that time, by the forging pressure in the up and down direction which is perpendicular to the communicating direction, even if the desired communicating portion 13 of the knuckle 10 is long, and even if the connecting portions 11 and 12 are in shapes having a boss portion 14 which is thicker than the communicating portion 13, each of connecting portions 11 and 12 and raw material communicating portion 7 can be forged.

### (Deburring Process)

Next, as shown in Figure 1 (B), a die for deburring which comprises a lower die 3 and an upper die 4 was prepared. At the lower die 3, three through holes 3a to 3c are provided up and down in parallel respectively; and at the upper die 4, three convex portions 4a to 4c which can be contained in each of through holes 3a to 3c are projectionally provided in parallel. The tip surfaces of each of convex portions 4a to 4c are provided in concave shape whose cross section is in semi-sphere shape.

On the upper surface of the lower die 3 of this deburring die, a forged product W₁ was mounted; and burrs 8 were removed from the forged product W₁ by lowering the upper die 4 so that the deburred product W₂ was obtained.

### (Bending Process)

Then, as shown in Figure 1 (C), a bending die comprising a lower die 5 and an upper die 6 was prepared. At the lower die 5, one stick of concave portion 5b having the bottom surface whose cross section is in semi-sphere shape is provided; and at the upper surface of the lower die 5, concave portion 5a and 5c which are adjacent to the concave portion 5b and whose cross sections are in semi-sphere shapes are provided in parallel to the concave portion 5b respectively. At the upper die 6, one stick of convex portion 6b which can be contained in the concave portion 5b and whose tip surface has the semi-sphere shaped cross section is provided so as to project; and at the lower surface of the upper die 6, concave portions 6a and 6c which face concave portions 5a and 5c and whose cross sections are in semi-sphere shapes are provided so as to be in parallel to the convex portion 6b respectively and so as to be in concave shapes.

On the upper surface of the lower die 5 of this bending die, the deburred product W₂ was mounted; and rough beam portions 13a to 13c of the raw material communicating portion 7 were bent by lowering the upper die 6 and by the predetermined bending pressure. By doing this, as shown in the communicating portion 13 (refer to Figures 2 and 4) of Figure 3, each of beam portions 13a to 13c were expanded at intervals of 120° so as to be not existed in the same plane. The diameter d of each of beam portions 13a to 13c is 16 mm and the diameter D of the concentric circle (shown in two dotted chain line) formed by each of beam portions 13a to 13c is set to be 53 mm.

After that, by cutting, as shown in Figures 2 and 4, bolt holes 11a, 12a, 15a and 16a at the connecting portions 11 and 12 and brackets 15 and 16 were formed in the predetermined diameters; and an axial hole 94a was formed at a boss portion 14 so as to have the predetermined diameter. Furthermore, a bearing surface 14b is cut at the side of the boss 14.

In this knuckle 10, the shape shown in Figure 3 was set to be section modulus model so that the section modulus was calculated. As a result, in this knuckle 10, the section modulus was obtained to be 7155 mm³ when any of each beam portions 13a to 13c was raised in the up and down bending, and the section modulus was obtained to be 6419 mm³ when any of each beam portions 13a to 13c was raised in the right and left bending.

Also in this knuckle 10, the shape shown in Figure 3 was set to be section modulus model so that the cross-section area which corresponds to the weight was calculated. As a result, in this knuckle 10, the cross-section area was 603 mm².

### Second Preferred Embodiment

In a Second Preferred Embodiment, the arm according to Claim 1 was formed by the method other than the method in Claim 2. The same constructions are marked by the same reference numbers.

### (Forging Process)

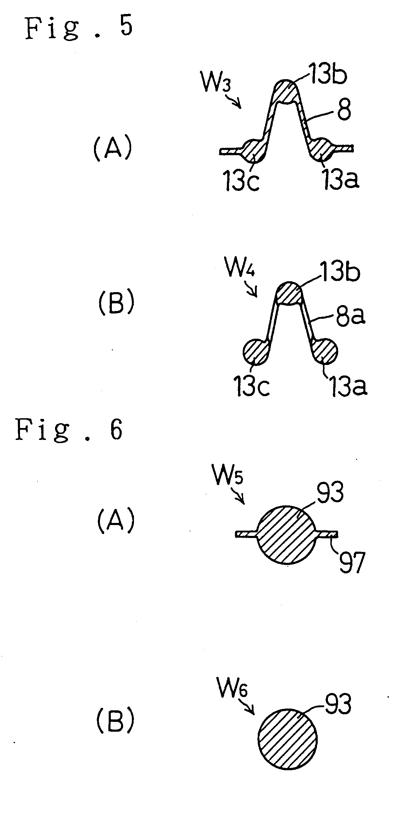

By a general forging process, a forged product W₃ shown in Figure 5 (A) was obtained. This forged product W₃ comprises: three beam portions 13a to 13c which are not existed in the same plane; and burrs 8 which are existed among each of raw material beam portions 13a to 13c and at the side surfaces of raw material beam portions 13a and 13c. The other portions of the connecting portions 11 and 12 and the communicating portion 13 are not shown in Figures.

At that time, also by the forging force of the up and down direction which is perpendicular to the communicating direction, each of connecting portions 11 and 12 and the communicating portion 13 can be forged.

### (Deburring Process)

Next, by a general deburring process, a deburred product W₄ which is shown in Figure 5 (B) was obtained. This deburred product W₄ was formed by removing window portions 8a from burrs 8 in the forged product W₃. This burred product W₄ was conducted by cutting process so that knuckle as the product was obtained.

In this knuckle, the section modulus model is as the same as that of the First Preferred Embodiment so that the section modulus and the cross-section area are the same as those in First preferred Embodiment.

### Comparative Example 1

In a Comparative Example 1, the conventional knuckles shown in Figure 12 to 14 are formed by the conventional methods. The same constructive components are marked by the same reference numbers.

### (Forging Process)

By a general forging process, a forged product W₅ which is shown in Figure 6 (A) was obtained. This deburred product W₅ comprises: a communicating portion 93 whose cross section is solid and which was formed in almost circular shape; and burrs 97 existed on the side surfaces of this communicating portion 93. The other portions of the connecting portions 11 and 12 and the communicating portion 93 are not shown in Figures.

### (Deburring Process)

Next, by a general deburring process, a deburred product W₆ which is shown in Figure 6 (B) was obtained. This deburred product W₆ was formed by removing burrs 97 from the forged product W₅. This burred product W₆ was conducted by cutting process so that knuckle as the product was obtained.

In this knuckle, the circular shape whose diameter is 40 mm was set to be the section modulus model and the section modulus and the cross-section area were calculated. As a result, in this knuckle, the section modulus was 6283 mm³ and the cross-section area was 1257 mm².

### Comparative Example 2

In a Comparative Example 2, the communicating portion of the knuckle was formed in a shape whose cross section is almost I. The same constructive components are marked by the same reference numbers.

### (Forging Process)

By a general forging method, a forged product W₇ which is shown in Figure 7 (A) was obtained. This forged product W₇ comprises: a communicating portion 81 which was formed in a shape whose lateral cross section is in I shape, that is, in which two sticks of ribs are extending in parallel; and burrs 82 existed at the side surface of this communicating portion 81. The other portions of the connecting portion 11 and 12 and the communicating portion 81 are not shown in Figures.

### (Deburring process)

Next, by a general deburring process, a deburred product W₈ shown in Figure 7 (B) was obtained. This deburred product W₈ was formed by removing burrs 82 from the forged product W₇. This deburred product W₈ was conducted cutting process so that knuckle as the product was obtained.

In this knuckle, the shape shown in Figure 7 (C) was set to be the section modulus model and the section modulus and the cross-section area were calculated. Here, in Figure 7 (C), a = 8 mm, b = 48.5 mm, c = 8 mm, e = 29 mm and f = 13 mm. As a result, the section modulus of this knuckle was 6296 mm³ in the up and down bending, 6287 mm³ in the right and left bending and the cross-section area was 880 mm².

### Evaluation

The section modulus and cross-section area of the First and Second Preferred Embodiments and Comparative Examples 1 and 2 are shown in Table 1.

**TABLE 1**

| | section modulus (mm³) | difference (mm³) | cross-section area (mm²) | difference (%) |
|---|---|---|---|---|
| First Preferred Embodiment | 7155 | + 872 | 603 | - 52 |
| | 6419 | + 136 | | |
| Second Preferred Embodiment | ditto | ditto | ditto | ditto |
| Comparative Example 1 | 6283 | reference | 1257 | reference |
| Comparative Example 2 | 6296 | + 13 | 880 | - 36 |
| | 6287 | + 4 | | |

As is clear from the Table 1, section modulus of the knuckles of the First and Second Preferred Embodiments are higher than those of the Comparative Examples 1 and 2 in which the cross section of the communicating portion 13 is solid and almost in circular shape or the cross section thereof is almost in I shape. Also, when the First and Second Preferred Embodiment are compared with the Comparative Examples 1 and 2, as the materials at the spaces of each of beam portions 13a to 13c, the weight of knuckles of the First and Second Preferred Embodiment can be reduced.

As the knuckles of the First and Second Preferred Embodiments, because this kind of knuckles was obtained mainly by forging and bending caused by the bending pressure, the metallographic structure is uniform as a whole, toughness is strong and at the same time, it is clear that the bending strength of the communicating portion 13 at which the bending force is received is not impaired. The bolt 11a which is cut at the connecting portion 11, the bending force is not received at the connecting portion 11 so that the characteristics is not damaged.

Furthermore, it is easy to forge the knuckles of the First and Second Preferred Embodiments without needing the high forging pressure so much and at the same time, the forging defects are hard to be generated.

Accordingly, when thus obtained knuckles of the First and Second Preferred Embodiment in which the necessary strength against bending force is secured and also the weight thereof is reduced are applied to a suspension, unspring load can be reduced and there are some advantages in which the fuel consumption is improved with respect to the lightening of the vehicle and in which the suspension characteristics are improved.

### Third Preferred Embodiment

Also in a Third Preferred Embodiment, the knuckle of Claim 1 is formed by the forging method of Claim 2.

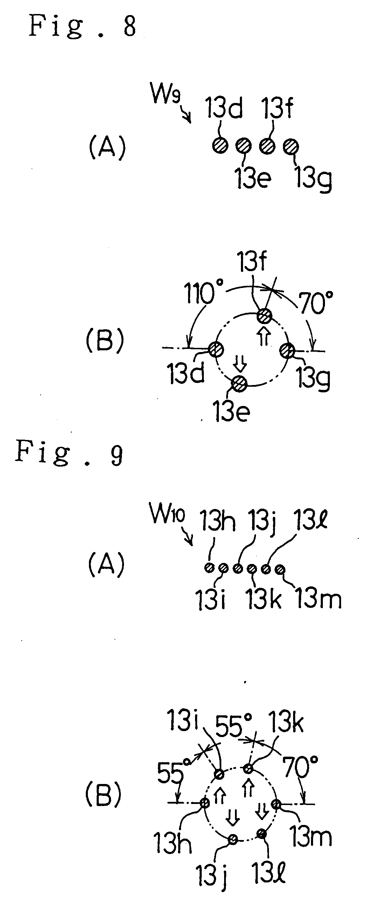

Being undergone the same forging process and the deburring process as those of the First Preferred Embodiment, a deburred product W₉ shown in Figure 8 (A) was obtained. This deburred product W₉ comprises four sticks of raw material beam portions 13d to 13g. The other portions of the connecting portions 11 and 12 and the communicating portions are not shown in Figures.

Next being undergone the same bending process and cutting process as those of the First Preferred Embodiment, a knuckle shown in Figure 8 (B) was obtained. In this knuckle, the beam portions 13e and 13f are bent toward the arrow directions respectively so that the space between the beam portions 13d and 13f and the space between the beam portions 13g and 13e are extended to be the spaces of 110°; and the space between the beam portions 13f and 13g and the space between the beam portions 13e and 13d are extended to be the spaces of 70°; and therefore, they are designed so as not to be existed in the same plane.

In this knuckle, the bending strength at the direction in which the space is narrow is strong. Accordingly, by the forging method of the Claim 2, when the bending strength is intended to be strong at the particular direction, it is possible to adjust the angles between each of beam portion easily so that it is easy to cope with the desired condition.

### Fourth Preferred Embodiment

Also in a Fourth Preferred Embodiment, the knuckle of Claim 1 is formed by the forging method of Claim 2.

Being undergone the same forging process and the deburring process as those of the First Preferred Embodiment, a deburred product W₁₀ shown in Figure 9 (A) was obtained. This deburred product W₁₀ comprises six sticks of raw material beam portions 13h to 13m. The other portions of the connecting portions 11 and 12 and the communicating portion 13 are not shown in Figures.

Next, being undergone the same bending process and cutting process as those of the First Preferred Embodiment, a knuckle shown in Figure 9 (B) was obtained. In this knuckle, the beam portions 13i, 13j, 13k and 13l are bent toward the arrow directions respectively so that the space between the beam portions 13h and 13i, the space between the beam portions 13i and 13k, the space between the beam portions 13m and 13l and the space between the beam portions 13l and 13j are extended to be the spaces of 55°; and the space between the beam portions 13k and 13m and the space between the beam portions 13j and 13h are extended to be the spaces of 70°; and therefore, they are designed so as not to be existed in the same plane.

In this knuckle of the Fourth Preferred Embodiment, the same effects as described in the Third Preferred Embodiment are obtained.

### Fifth Preferred Embodiment

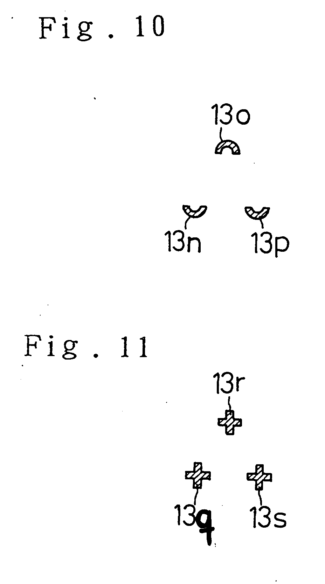

In a knuckle of a Fifth Preferred Embodiment, as shown in Figure 10, each of beam portions 13n to 13p are formed in sluice shape. The forging method thereof and the other constructions are the same as those of the First Preferred Embodiment.

Also in this knuckle, the same effects as those of the First Preferred Embodiment are obtained. Accordingly, in the method of Claim 2, the shapes of each beam portions have high degree of freedom so that they can be forged so as to obtain the arbitrary shapes which are suitable for bending strength.

### Sixth Preferred Embodiment

A knuckle of a Sixth Preferred Embodiment, as shown in Figure 11, is formed so that each of beam portions 13q to 13s are in + shape. The forging method and the other constructions are same as those of the First Preferred Embodiment.

Also in this knuckle of the Sixth Preferred Embodiment, the same effects as those of the First Preferred Embodiment can be obtained.

## Claims

1. An arm comprising:
- at least two connecting portions (11,12) connectable to a vehicle suspension;
- a communicating portion (13) that communicates each of said at least two connecting portions along communicating directions, whereby said communication portion receives a bending force and includes at least three beam portions (13a-13c;13d- 13g;13h- 13m;13n- 13p;13q- 13s), which extend along each communicating direction,
**characterised in that**
- said at least three beam portions are separated from each other and do not occupy the same plane.

2. Arm according to claim 1, wherein three beam portions arranged at intervals of 120° are provided.

3. Arm according to claim 2, wherein the three beam portions are formed in sluice shape.

4. Arm according to claim 2, wherein the three beam portions are in + shape.

5. Arm according to claim 1, wherein four beam portions are provided, and wherein adjacent beam portions of that portions have alternatively spaces of 110° and 70° between each other.

6. Arm according to claim 1, wherein six beam portions are provided, and wherein adjacent beam portions of that portions have spaces of 55° and 70° between each other.

7. Arm according to claim 2, 5 or 6, wherein the beam portions are molded in circular shape.

8. A process for making an arm comprising
- a forging step to form
- - at least two connecting portions (11,12) that are connectable to a vehicle suspension, and
- - a communication portion from a raw material, whereby said communication portion communicates each of said at least two connecting portions along communicating directions and includes at least three raw beam portions (13a-13c;13d- 13g;13h- 13m;13n- 13p;13q- 13s),
**characterised in the steps of**
- bending said at least three beam portions such they do not occupy the same plane,
- removing material existing between said at least three raw beam portions before or after said bending step so as to separate said at least three beam portions from each other.

9. Process according to claim 8, wherein the forging step and the bending step are executed at the same time.

## Patentansprüche

1. Lenker, der aufweist
zumindest zwei Kopplungsabschnitte (11, 12), die mit einer Fahrzeugaufhängung verbindbar sind,
einen Verbindungsabschnitt (13), der jeden der zumindest zwei Kopplungsabschnitte in Verbindungsrichtungen verbindet, wobei der Verbindungsabschnitt eine Biegekraft aufnimmt und zumindest drei Trägerabschnitte (13a-13c; 13d-13g; 13h-13m; 13n-13p; 13q-13s) aufweist, die sich in die jeweilige Verbindungsrichtung erstrecken,
**dadurch gekennzeichnet, daß**
die zumindest drei Trägerabschnitte voneinander getrennt sind und nicht die gleiche Ebene einnehmen.

2. Lenker nach Anspruch 1, wobei drei Trägerabschnitte, die in Intervallen von 120° angeordnet sind, vorgesehen sind.

3. Lenker nach Anspruch 2, wobei die drei Trägerabschnitte in Grabenform ausgebildet sind.

4. Lenker nach Anspruch 2, wobei die drei Trägerabschnitte in +-Form ausgebildet sind.

5. Lenker nach Anspruch 1, wobei vier Trägerabschnitte vorgesehen sind und wobei benachbarte Trägerabschnitte dieser Abschnitte abwechselnd Abstände von 110°C und 70°C zueinander haben.

6. Lenker nach Anspruch 1, wobei sechs Trägerabschnitte vorgesehen sind und wobei benachbarte Trägerabschnitte dieser Abschnitte Abstände von 55° und 70° zueinander haben.

7. Lenker nach Anspruch 2, 5 oder 6, wobei die Trägerabschnitte in Kreisform geformt sind.

8. Verfahren zur Herstellung eines Lenkers, das aufweist einen Schmiedeschritt zum Ausbilden von
- zumindest zwei Kopplungsabschnitten (11, 12), die mit einer Fahrzeugaufhängung verbindbar sind, und
- einem Verbindungsabschnitt aus einem Rohmaterial, wobei der Verbindungsabschnitt jeden der zumindest zwei Kopplungsabschnitte in Verbindungsrichtungen verbindet und zumindest drei Roh-Trägerabschnitte (13a-13c; 13d-13g; 13h-13m; 13n-13p; 13g-13s) aufweist,
**gekennzeichnet durch die Schritte**
Biegen von den zumindest drei Trägerabschnitten, so daß diese nicht die gleiche Ebene einnehmen,
Entfernen von Material, das zwischen den zumindest drei Roh-Trägerabschnitten vorliegt, vor oder nach dem Biegeschritt, um die zumindest drei Trägerabschnitte voneinander zu trennen.

9. Verfahren nach Anspruch 8, wobei der Schmiedeschritt und der Biegeschritt gleichzeitig ausgeführt werden.

## Revendications

1. Bras comprenant :
- au moins deux parties de raccord (11, 12) connectables à une suspension de véhicule ;
- une partie de communication (13) qui fait communiquer chacune desdites au moins deux parties de raccord le long de directions de communication, d'où il résulte que ladite partie de communication reçoit une force de flexion et inclut au moins trois parties de poutrelle (13a à 13c ; 13d à 13g ; 13h à 13m ; 13n à 13p ; 13q à 13s) qui se prolongent le long de chaque direction de communication,
caractérisé en ce que
- lesdites au moins trois parties de poutrelle sont séparées les unes des autres et ne se trouvent pas dans le même plan.

2. Bras selon la revendication 1, dans lequel les trois parties de poutrelle disposées à des intervalles de 120° sont prévues.

3. Bras selon la revendication 2, dans lequel les trois parties de poutrelle sont formées en une forme d'auge.

4. Bras selon la revendication 2, dans lequel les trois parties de poutrelle sont en forme de +.

5. Bras selon la revendication 1, dans lequel quatre parties de poutrelle sont prévues et dans lequel les parties de poutrelle adjacentes de ces parties ont des espaces alternés de 110° et de 70° les unes entre les autres.

6. Bras selon la revendication 6, dans lequel six parties de poutrelle sont prévues et dans lequel les partiés de poutrelle adjacentes de ces parties ont des espaces de 55° et 70° entre chacune d'elles.

7. Bras selon la revendication 2, 5 ou 6, dans lequel les parties de poutrelle sont moulées en une forme circulaire.

8. Procédé pour fabriquer un bras comprenant ;
- une étape de forgeage pour former
- - au moins deux parties de raccord (11, 12) qui sont connectables à une suspension d'un véhicule, et
- - une partie de communication à partir d'un matériau brut, d'où il résulte que ladite partie de communication fait communiquer chacune desdites au moins deux parties de raccord le long des directions de communication et inclut au moins trois parties de poutrelle de matériau brut (13a à 13c ; 13d à 13g ; 13h à 13m ; 13n à 13p ; 13q à 13s),
caractérisé par les étapes consistant à
- plier lesdites au moins trois parties de poutrelle d'une manière telle qu'elles ne se trouvent pas dans le même plan,
- enlever le matériau existant entre lesdites au moins trois parties de poutrelle avant ou après l'étape de pliage de façon à séparer lesdites au moins trois parties de poutrelle les unes des autres.

9. Procédé selon la revendication 8, dans lequel l'étape de forgeage et l'étape de pliage sont exécutées au même instant.
